# EUROPEAN PATENT SPECIFICATION

(11) **EP 3 080 018 B1**
(45) Date of publication and mention of the grant of the patent: **13.12.2017**
(21) Application number: 14737036.5
(22) Date of filing: 18.06.2014
(51) Int. Cl.: B65G 17/32, B65G 15/58, C25D 17/00, C25D 17/06, C25D 5/00, C25D 7/12

(54) **TRANSPORT MEMBER FOR TRANSPORTING PLATE-SHAPED SUBSTRATES WHICH ARE TO BE ELECTROLYTICALLY GALVANIZED IN A BATH, AND DEVICE FOR AND METHOD OF ELECTROLYTICALLY GALVANIZING SUCH SUBSTRATES**
TRANSPORTELEMENT ZUM TRANSPORT VON PLATTENFÖRMIGEN SUBSTRATEN ZUR ELEKTROLYTISCHEN VERZINKUNG IN EINEM BAD SOWIE VORRICHTUNG UND VERFAHREN ZUR ELEKTROLYTISCHEN VERZINKUNG SOLCHER SUBSTRATE
ÉLÉMENT DE TRANSPORT SERVANT À TRANSPORTER DES SUBSTRATS SOUS FORME DE PLAQUES DEVANT SUBIR UNE GALVANISATION ÉLECTROLYTIQUE DANS UN BAIN ET DISPOSITIF AINSI QUE PROCÉDÉ DE GALVANISATION ÉLECTROLYTIQUE DESDITS SUBSTRATS

(30) Priority: 08.07.2013 NL 2011117
(43) Date of publication of application: 19.10.2016
(73) Proprietor: Meco Equipment Engineers B.V., 5151 DR Drunen (NL)
(72) Inventor: KLOOSTERBOER, Robert, NL-1901 AC Castricum (NL); KIVITS, Marc Henricus Marinus, NL-5246 EA Rosmalen (NL)
(74) Representative: Algemeen Octrooi- en Merkenbureau B.V.
(86) International application number: PCT/NL2014/050400
(87) International publication number: WO 2015/005767

(56) References cited:
- EP-A2- 2 574 688
- WO-A1-2013/073942
- NL-C2- 1 035 265
- US-B1- 6 299 745

## Description

The present invention relates to a transport member for transporting plate-shaped substrates, such as those used for solar cells, which substrates are to be electrolytically galvanized in a bath, comprising a carrier belt which in operation extends along an endless horizontal track, with fastened thereto, preferably at least partly by their own spring force, resilient wire-shaped first contact members which each have a first contact portion that is designed for contacting, in an electrically conducting manner, a first side of a substrate under prestress in an active position of the first contact member and for being clear of the substrate in an inactive position of the first contact member.

The invention aims at, though not exclusively so, the use of the transport member in conjunction with non-metallic, vitreous substrates and/or substrates of a semiconductor material, such as in particular silicon, for the manufacture of solar cells. A substrate is understood to be a plate-shaped element within the context of the invention, in particular a rectangular silicon wafer for a solar cell.

The invention also relates to a device for and a method of electrolytically galvanizing plate-shaped substrates in a bath.

NL 1035262 discloses a known device for electrolytically galvanizing plate-shaped substrates, such as for solar cells. An endless transport member, passed over wheels, with clamping members for holding a substrate by clamping force is provided for transporting a suspended substrate through an electrolytic bath.

It is an object of the invention to provide a transport member for transporting non-metallic vitreous substrates which are to be electrolytically galvanized in a bath, having a more universal applicability.

Said object is achieved with the transport member according to the invention which is characterized in that the transport member further comprises resilient wire-shaped second contact members fastened thereto, preferably at least partly by their own resilience, which second contact members each have a second contact portion that is designed for contacting, in an electrically conducting manner, a second side of the same substrate under prestress in an active position of the second contact member and for being clear of said same substrate in an inactive position of the second contact member, while the transport member further comprises blocking means for blocking the first contact members and the second contact members in the inactive positions thereof during the electrolytic galvanizing process.

An advantage of the transport member according to the invention arises from the fact that the contact members can be blocked in the active state by the blocking means. A substrate can be galvanized in a greater number of different manners as a result of this because a contact portion may or may not be brought into electrically conducting contact with the first or the second side of the substrate, as desired, in dependence on the galvanizing method and the substrate.

It is favourable when the blocking means comprise a first blocking element for each first contact member and a second blocking element for each second contact member for blocking the associated contact member in the inactive position.

In a favourable embodiment, the blocking means of at least one of the first contact members and the second contact members comprise blocking elements which are integrated into the carrier belt.

It is furthermore favourable when the carrier belt is manufactured from an electrically conducting material and comprises abutment elements of an electrically insulating material at the locations of the first contact portions, which abutment elements are provided such that a substrate in the active position is clamped in between an abutment face of an abutment element and a first contact portion with the second side of the substrate lying against the abutment face.

It is favourable in this context when the first contact members in their inactive position each bear with a portion closely adjoining the contact portion on a respective associated abutment element such that the contact portion is at a distance from the abutment face of the relevant abutment element.

It is furthermore favourable here when the first contact members are located mainly at a rear side of the carrier belt, which rear side faces in the same direction as the second side of the substrate, and extend through passages in the carrier belt to a front side of the carrier belt such that at least the contact portion and the portion adjoining the contact portion are present at the front side. A front side of the carrier belt thus remains to a high degree free from components of the contact members.

It is favourable when the abutment elements define an edge which projects from the carrier belt and behind which said portion of the first contact member closely adjoining the contact portion is hooked under the influence of the resilience of the first contact member, at least in the inactive position, while the first contact member is configured such that its first contact portion moves into the active position under the influence of the resilience of the first contact member when switching means move said portion off said edge.

Preferably, the second contact members are located mainly at a rear side of the carrier belt, which rear side faces in the same direction as the second side of the substrate, while the carrier belt has a passage for each second contact member into which the respective contact member in the active position thereof enters with a projecting portion, and the carrier belt furthermore comprises for each second contact member a receving portion located close to said passage, the receiving portion forming the abutment element, and being designed for receiving the projecting portion such that the second contact member is in the inactive position.

It is highly favourable when one first contact portion and one second contact portion are in contact with the substrate, at least in their active positions, in one another's immediate vicinity each time, preferably at the same longitudinal position of the carrier belt.

Preferably, the first contact members and the second contact members are formed by one integral resilient wire-shaped contact member.

It is furthermore favourable when the transport member further comprises resilient wire-shaped clamping members fastened to the carrier belt by their own spring force for gripping a substrate with clamping force.

The invention further relates to a device for electrolytically galvanizing plate-shaped substrates, such as those for solar cells, in a bath with an electrolytic solution, comprising a transport member according to the present invention, wheels which are rotatable about vertical axes and over which the transport member is passed, first operating means arranged alongside the transport member for switching a first contact member between the active position and the inactive position against its prestress due to contact between the first operating means and a portion of said first contact member, and second operating means arranged alongside the transport member for switching a second contact member between the active position and the inactive position against its prestress due to contact between the second operating means and a portion of said second contact member. The advantages of the device according to the invention are analogous to those of the transport member according to the invention described above.

The invention in addition relates to a method of electrolytically galvanizing plate-shaped substrates, such as those for solar cells, with the use of a device according to the invention, comprising:
attaching a substrate to the transport member according to the invention,
achieving, by the second operating means, that at least one second contact member in the active position thereof is in contact by its second contact portion with a second side of the substrate,
cathodically switching the substrate via the second contact member for the purpose of light induced plating, and illuminating the substrate with lighting means such that a seed layer of electrically conducting material is deposited from the electrolytic solution onto the first side of said substrate,
subsequently achieving, by the second operating means, that said at least one second contact member is brought into its inactive position, and achieving, by the first operating means, that at least one first contact member in the active position thereof is in contact by its first contact portion with the seed layer on the first side of the substrate, and
cathodically switching the seed layer via the first contact portion for the purpose of electrolytically galvanizing such that electrically conducting material is deposited from the electrolytic solution onto the seed layer on the first side of the substrate. The advantages of the method according to the invention are analogous to those of the transport member according to the invention described above.

The invention will be explained in more detail below by means of a description of a preferred embodiment of a transport member according to the invention with reference to the attached figures, in which:
Figure 1 is an isometric view of part of an electroplating device in which a transport member according to the invention can be used;
Figure 2 shows the device of figure 1 in side elevation;
Figure 3 shows the device of figure 1 in a vertical cross-section;
Figure 4 shows part of a transport member according to the invention for use in a device as shown in figure 1, with two substrates (partly shown) suspended therefrom, in an isometric view taken from the front;
Figure 5a is an isometric view from the rear showing the transport member according to figure 4;
Figure 5b is an isometric view from the rear showing a portion of the transport member according to figure 4;
Figures 6a and 6c are cross-sectional views of the transport member of figure 5 with a contact member and a substrate in different respective positions;
Figure 6b shows the transport member with a contact member and a substrate as shown in figure 6a in rear elevation;
Figure 7a is a cross-sectional view showing the transport member and a substrate in a yet further position; and
Figure 7b shows the transport member with a contact member and a substrate as shown in figure 7a in rear elevation.

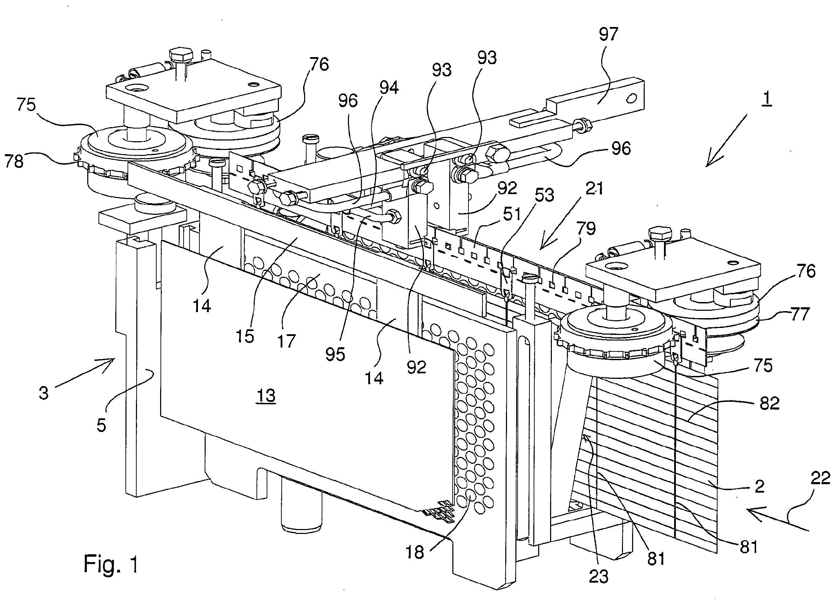

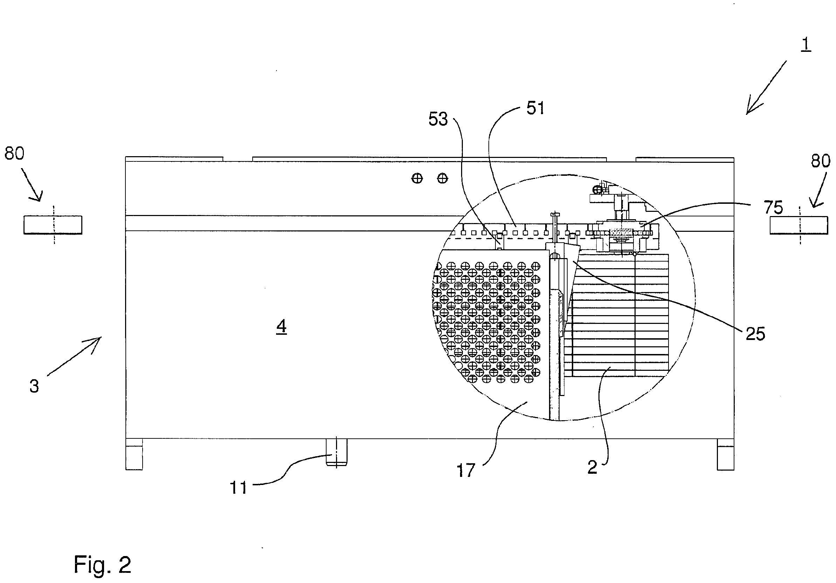

The figures 1, 2 and 3 show (portions of) a device 1 to which the invention relates in various elevations / cross-sections. The device 1 is designed for electrolytically galvanizing rectangular plate-shaped substrates 2. In the present invention, these substrates are specifically rectangular silicon panels whose sides have a length of between approximately 125 mm and 210 mm and whose thickness lies between 50 µm and 300 µm. It is characteristic of this type of material that it is very fragile and thus easily breaks into pieces. Such substrates are used in the manufacture of solar cells. In the present example an electrically conducting material is provided on one side of each substrate 2 (the side facing the viewer in figures 1 and 2), for example by vapour deposition or printing, so as to constitute a seed layer, here in the form of two vertically oriented main tracks 81 ("bus bars") and a larger number of horizontally oriented sub-tracks 82 ("fingers") which each intersect the main tracks 81 and accordingly are in electrically conducting contact therewith. Alternatively, the substrate may comprise more or fewer than two main tracks 81. Before the galvanizing process, the thickness of the main tracks 81 and the sub-tracks 82, i.e. of the seed layer, is at most 5 µm and preferably between 0.05 µm and 2 µm, while the width of the sub-tracks 82 lies between 10 µm and 150 µm, preferably between approximately 20 µm and 60 µm.

The invention is also highly suitable for use with substrates having a seed layer at both the front and the rear side, with substrates having an exposed outer layer at both the front and rear side designed for light induced plating, and with substrates whose outer layer is a thin electrically conducting layer, for example metallic of copper or nickel, or of a conductive oxide, on which portions not to be electroplated are covered with photoresist.

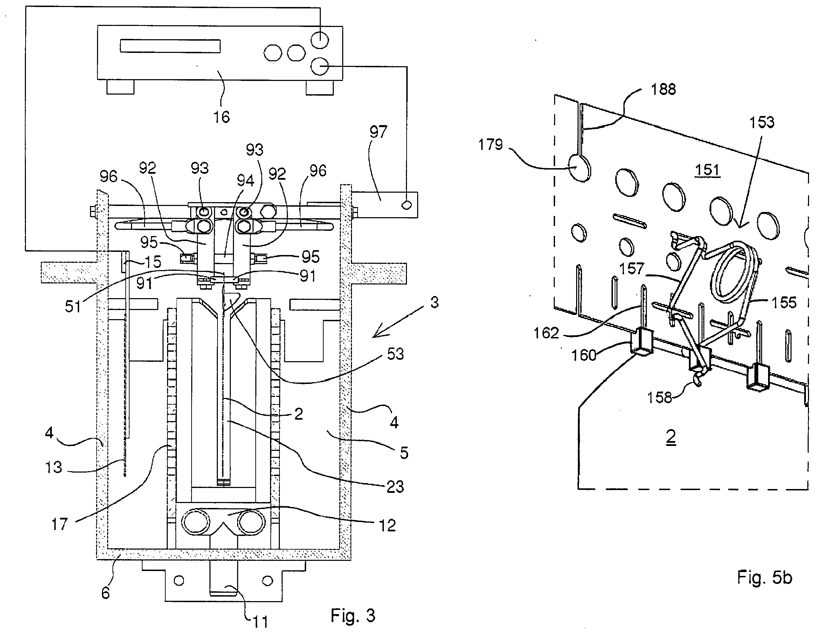

The device 1 comprises an electrolytic bath 3 for an electrolytic solution with mutually opposed side walls 4, mutually opposed end walls 5 and a bottom 6. The side wall 4 facing the viewer and the end wall 5 facing the viewer have not been shown for the sake of clarity, so that the interior of the bath 3 is visible. A vertical feed tube 11 is provided for supplying the electrolytic solution, which is continually being circulated by pumping means (not shown) during operation, which tube extends through the bottom 6 and issues inside the bath 3 adjacent the bottom 6 into a horizontal tube 12 which issues at two mutually opposed sides relative to the centre of the bath 3, as is visible in figure 3.

An anode 13 (not shown in figure 2 for the sake of clarity) is further provided in the interior of the bath 3, extending parallel to one of the side walls 4. The anode 13 is plate-shaped and is in fact a grid, as is shown in the right-hand bottom corner of figure 1. The anode 13 is suspended from two arms 14 which are connected anodically to a rectifier 16 inter alia via a contact arm 15.

Inside the bath 3, furthermore, there are two mutually facing distributor plates 17, which will be discussed further below, with a regular, comparatively dense pattern of holes 18. The space between the distributor plates 17 is reserved for substrates 2 which are to be passed through the electrolytic solution in the bath 3 there.

The device 1 comprises an endless transport member 21 which is yet to be described in detail and from which the substrates 2 are suspended for the purpose of transporting these substrates 2. The frontmost end wall 5 is provided with a vertical slit 23 so as to admit the substrates 2 to the bath, said substrates 2 being transported in a transport direction 22 by the endless transport member 21. The slit 23 has a sloping orientation against the transport direction 22 so that the upper side of a substrate 2 will pass through the slit 22 earlier than the lower side of the same substrate 2. Each substrate 2 thus enters the bath 3 gradually through the slit 23, which limits the mechanical load on the substrate 2. It is to be noted here that an electrolytic solution in the bath 3 will have a tendency to leave the bath 3 through the slit 23.

The substrate 2 is electrolytically processed (galvanized) during its stay in the bath 3. The electrolytic solution is continually circulated in the bath 3 during this treatment, as was indicated above. More specifically, purified electrolytic solution enters the bath 3 via the two mutually opposed sides of the horizontal tube 12 at an angle of 45° to the bottom 6 and the walls 4 and flows mainly in the direction of the two mutually opposed side walls 4 and from there in an upward direction. The electrolytic solution can be enriched with metal ions, especially at the side of the anode 13, which ions dissolve in the electrolytic solution from the anode. A comparatively large proportion will subsequently leave the bath again along the upper edges of the slides provided in recesses at the upper sides of the end walls 5. A limited portion of the electrolytic solution will enter the space between the distributor plates 17 through the holes 18 in the distributor plates 17 in order to give off metal ions to the substrate 2 there for the growth of an electrically conducting material thereon. The use of the distributor plates 17 leads to a comparatively quiet movement of electrolytic solution in the immediate vicinity of the substrates 2, which reduces the mechanical load on the substrates 2 caused by the flow of the electrolytic solution as much as possible and which benefits the uniformity of the deposition of material on the substrates.

As was noted above, an endless transport member 21 is used for transporting the substrates 2 through the bath 3. The endless transport member 21 comprises an endless belt 51, for example passed over two rotary wheels 80 which are merely diagrammatically indicated in figure 2, which can be rotated about a vertical axis, and which are held in a fixed position relative to the bath 3, possibly by means of a frame, at least one of said wheels being rotatable by drive means (not shown in the figures) such as an electric motor. The transport member 21 is guided by pairs formed by a gear 75 and a pressure wheel 76 and is driven by drive wheels 80 which in their turn are driven. Pairs 75, 76 are provided both upstream and downstream of the bath 3. The gears 75 and pressure wheels 76 are made from a dielectric material. The teeth 78 of the gears 75 are an exception to this; these are manufactured from a metal such as stainless steel because of its favourable wear resistance. A groove 77 is provided in the pressure wheels 76 at the same level as the teeth 78, within which groove the teeth 78 of the gear side facing towards the pressure wheels 76 are located. The belt 51 is provided with holes 79 at regular distances to one another whose shape is adapted to the shape of the teeth 78 and which cooperate with the teeth 78 of the gears 75. The transport member 21 is guided in this manner. To make the belt 51 more flexible, it was opted for in the present preferred embodiment to make a vertical slot 88 at least from every second hole 79 up to the upper edge of the belt 51.

The endless transport member 21 further comprises resilient contact members 53 at regular distances to one another. The pitch of these contact members 53 corresponds to the distance between the two main tracks 81 of a substrate 2. The substrates 2 are furthermore at such a distance from one another that adjoining main tracks 81 are also at the same pitch. It is thus possible to grip each substrate 2 with clamping force adjacent the upper edge of the substrate 2 by means of two contact members 53 exactly in the locations of the two main tracks 81 of the relevant substrate 2.

The transport member 21 is loaded with substrates 2 in an automated manner. Substrates 2 stacked underneath and next to the track of the transport member 21 at the area of a loading station are offered to vacuum grippers. These vacuum grippers take an uppermost substrate 2 off the stack and pivot it about its horizontal axis parallel to the transport direction 22 until the substrate 2 has a vertical orientation as shown, for example, in figure 1. Two contact members 53 are opened at the area of the loading station in that a stud present there moves a clamping member 53 into an open position. As soon as this open position has been created, manipulation means move the vertically oriented substrates 2 into contact members while at the same time the substrate 2 is moved along with the transport member 21 by the manipulation means. Said studs are subsequently moved away from the clamping member 53, so that the clamping member 53 is closed again, thus ending the operation of the grippers on the substrate. The cycle described above repeats itself continually. To increase the capacity, the substrates may be presented from a plurality of stacks, for example two stacks of substrates, such that the upper substrates of the stacks are simultaneously suspended in the transport member. The transport member 21 is unloaded in exactly the reverse order. Loading of the transport member 21 with substrates may take place in an alternative manner such as, for example, in that substrates are consecutively presented at the area of a loading station via one or more transport belts.

It is important to note that the clamping parts of the contact members 53 extend below the belt 51. This offers the major advantage that the belt 51 itself need not, not even partly, be immersed in the electrolytic solution during the transport of substrates 2 through this electrolytic solution in the bath 3. This would imply that the belt 51 would also be electrolytically galvanized because of the cathodic voltage at the belt 51, which would necessitate a thorough cyclical cleaning of the belt 51 so as to remove any material deposited thereon. If it is desired that each substrate 2 is fully immersed in the electrolytic solution, the clamping parts of the contact members 53 will inevitably also be immersed in the electrolytic solution. These parts would then indeed have to be thoroughly cleaned cyclically in as far as they had been connected to the cathode. Alternatively, it may be highly favourable to immerse the substrates 2 only substantially fully in the electrolytic solution, i.e. to a level at which the contact members 53 are still just above the electrolytic solution. This provides the advantage that the contact members 53 themselves are not electrolytically processed. The disadvantage is that the portion of the substrate 2 located above the electrolytic solution is not galvanized either. The latter disadvantage, however, may be very minor in practice in view of the fact that the contact members 53 grip the substrates very close to their upper edges.

The main tracks 81, and accordingly the sub-tracks 82 via the main tracks 81, are connected to the anode via contact shoes 91 which are provided in fixed positions above the electrolytic bath 3 and which make sliding electrical contact with both sides of the endless belt 51, which is made from stainless steel. The contact shoes 91 are provided at the lower sides of pivot blocks 92 which can pivot to a limited degree about respective horizontal axes 93 that extend parallel to the transport direction 22. The action of a tension spring 94 on arms 95 which bear on the outer sides of the pivot blocks 92 cause the pivot blocks 92, and thus the contact shoes 91, to move towards one another. The contact shoes 91 are in electrical contact with the cathode side of the rectifier 16 via cables 96 and a contact strip 97 and other means.

In the present example, the contact members 53 are designed such that a portion that is in contact with a main track 81 located at one of the sides of the substrate is made of an electrically conducting material, such as stainless steel, whereas a portion that is in contact with the opposite side of the substrate is made from an insulating material. If electroplating of said opposite side of the substrate is also required, said portion in contact with the opposite side would also have to be made from an electrically conducting material so as to make electrically conducting contact with the electrically conducting material of the relevant opposite side of the substrate 2.

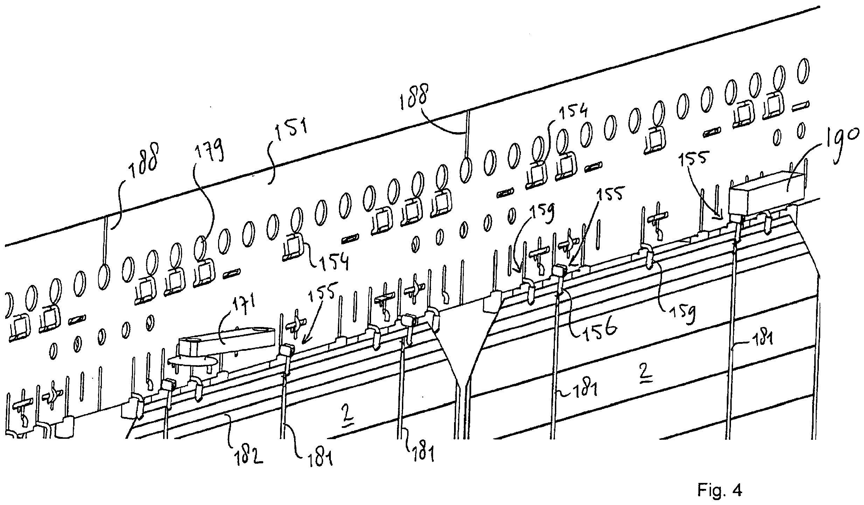

The present invention relates to a transport member that is suitable for use in a device for electroplating substrates as described above and that replaces the transport member 21 described above. A preferred embodiment of a transport member according to the invention is the transport member 121, or at least a portion thereof, as shown in the figures 4 to 7.

The transport member 121 comprises a carrier belt 151 of stainless steel. The carrier belt 151 has holes 179 at regular intervals for cooperating with gears of mating shape comparable to the gears 75 described above. Similar to the transport member 51, the transport member 151 is also laid around rotary wheels like the rotary wheels 80 described above, of which rotary wheels 80 at least one can be driven, for example by an electric motor. To make the belt 151 more flexible, the belt has vertical slits 188 at regular intervals, each extending from a hole 179 present in the relevant location upwards to the edge of the belt 151. Resilient clamping members 153 are provided at a lower side of the belt 151, fastened to the belt with their upper portions by their own spring force. Each of the clamping members 153 comprises a first contact member 155 which is designed for contacting, in an electrically conducting manner, a front of a substrate by means of a first contact portion 156 thereof, under prestress in an active position of said contact member 155, which substrate is shown in figure 4 and is provided with electrically conducting main tracks 181 and sub-tracks 182 that form a seed layer. In other words, a first contact portion 156 of the contact member 155 in its active position is in electrically conducting contact with a main track 181.

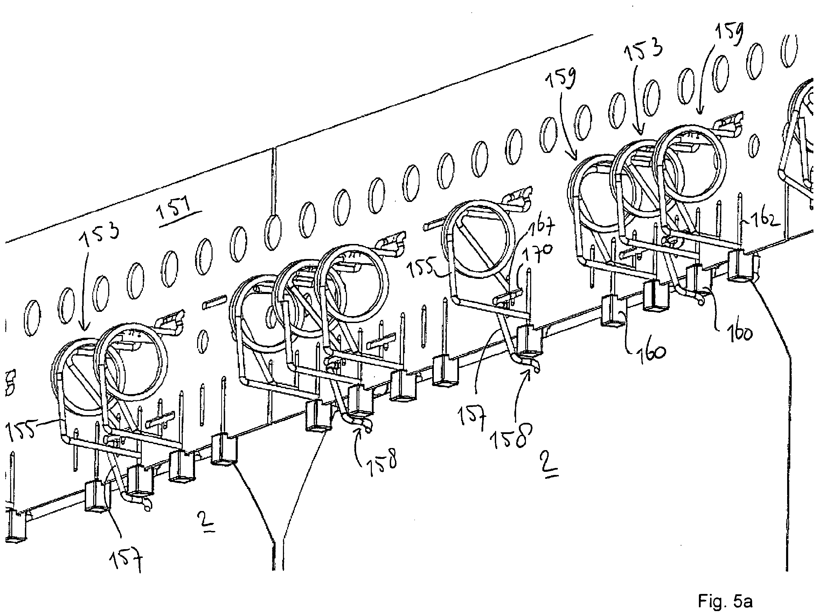

The clamping members 153 furthermore each comprise a wire-shaped second contact member 157 which is shown particularly clearly in figures 5a and 5b. Each second contact member 157 has a second contact member 158 that is in contact with a rear side of the substrate 2 in an active position of the second contact member yet to be described in more detail further below.

The transport member 121 further comprises clamping members 159 for clamping a substrate 2 against an abutment element 160 of electrically insulating material, yet to be described in more detail below, by means of an insulated end portion of said clamping member 159, i.e. in an electrically insulated manner These clamping members 159 are recognisable in figure 5a from the fact that they do not have a second contact member 157 as described above at the rear side of the belt 151 shown in figure 5.

A substrate 2 can be conducted through the electroplating bath 3 in that it is clamped between the clamping members 153 and the clamping members 159 in a manner similar to that described with reference to the belt 51.

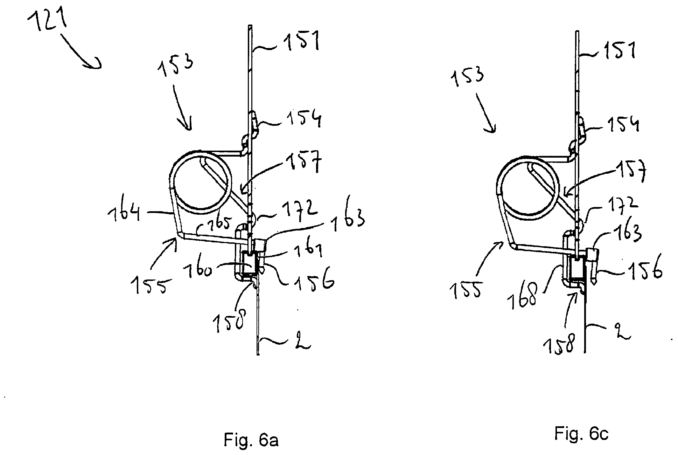

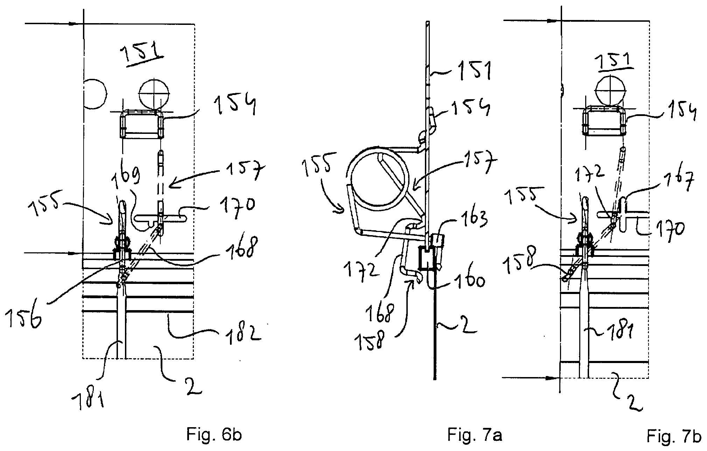

Figures 6 and 7 show a contact member 153 as described above with reference to figure 5b in combination with the belt 151 and a substrate 2 in side elevation for a further explanation of its construction and possibilities. An essential difference between the contact members 153 and the contact members 53 described earlier is that the former can be blocked in an inactive position by blocking means that form part of the transport member 121, in which position the relevant first or second contact member 155, 157 lies clear of the substrate 2.

In figure 6a, the first contact member 155 is in the active position in which the first contact portion 156 thereof is in electrically conducting contact with the substrate 2, more in particular with a main track 181 thereof. This is in contrast to figure 6c, where the first contact member 155 is in the inactive position in which the contact portion 156 is at a distance to the substrate 2. To block the first contact member 155 in the inactive state according to figure 6c, i.e. fixing it in the active state, the transport member 121 has blocking means comprising an abutment element 160 in the form of an electrically insulating plastic block that is snapped onto the lower side of the belt 151 by snapping means not shown in any detail. An alternative connection between these two components is equally possible within the scope of the invention. Each abutment element 160 has an abutment face 161 at its front side which cooperates with a first contact portion 156 such that a substrate 2 can be clamped in between the abutment face 161 and the first contact portion 156 in the active position of the first contact member 155. The substrate 2 is in electrically conducting connection by its front side with the first contact member 155 as a result of this, while the rear side of the substrate 2 is clamped against the abutment face 161 of the abutment element 160 in an electrically insulated manner.

Since the abutment element 160 is fastened by its central portion to the lower side of the belt 151, as is shown in figures 6a and 6c, the abutment face 161 is located somewhat further forward relative to a front face of the belt 151. The first contact member 155 extends from the upper portion 154 of the clamping member 153, i.e. from the position where the first contact member 155 thereof is fastened to the belt 151, approximately at right angles away from the belt 151 to the rear (see also figures 5a and 5b), whereupon it is looped around through a little more than two turns in the manner of a spiral spring and then extends in downward direction with a portion 164 approximately parallel to the belt 151. Then it makes a bend of approximately 90° in the direction of the belt 151, passes with its approximately horizontal portion 165 transversely through a slot 162 located centrally in the belt 151 above each abutment element 160 towards the front side of the belt 151, where it performs an approximately rectangular bend around the abutment element 160 in downward direction such that its contact portion 156 constitutes the free end of the first contact member 155. The first contact member 155 has a prestress such that the contact portion 156 is pressed down and backwards from above against the abutment element 160. A portion of the first contact member 155 located close to the first contact portion 156 is a blocking stud 163 made of plastic and snapped home onto the wire-shaped first contact member 155 just above the contact portion 156 at the area of the rectangular bend. Since the abutment element 160 has an abutment face 161 distanced from a front face of the belt 151, as described above, the abutment element 160 provides an edge behind which the blocking stud 163 can be hooked under the influence of the resilience of the first contact member 155 in the inactive position shown in figure 6c.

The electroplating device in which the transport member 121 is provided comprises operating means designed for cooperation with the blocking means 160, 163 described above and comprising a switching device arranged in a fixed position alongside the path of the belt 151, said switching device comprising a displaceable stud which can be automatically brought into engagement with the at least substantially horizontal portion 165 of the first contact member 155 described above and which is designed for moving upwards against said horizontal portion 156 so as to bring the first contact member 155 into the active position wherein the blocking stud 163 is moved off the edge of the abutment element 160, so that the first contact member 155 subsequently moves to the left, at least in the view presented by figure 6, under the influence of its own spring force and rests with its first contact portion 156 against the substrate 2, thus clamping the substrate 2 between the contact portion 156 and the abutment face 161. For moving into the inactive position, the switching means may comprise a further switching device with a stud or similar part which is designed for moving the at least substantially vertical portion 164 of the first contact member 155 as described above towards the belt 151 such that the first contact portion 156 and thus also the blocking stud 163 present at the front side of the belt 151 move away therefrom, as a result of which the blocking stud 163 is moved down by its own spring force to beyond the edge of the abutment element 160, behind which it will be hooked when said stud is removed.

The second contact member 157 is in the active position in the situations shown in figures 6a and 6c, with a second contact portion 158 thereof lying against the rear side of the substrate 2 with electrically conducting contact. As is apparent, the second contact member 157 extends from an upper portion 154, where the contact member 153 is fastened to the belt 151, first over some distance transversely to the belt 151 towards the rear, whereupon it bends through an acute angle, i.e. an enclosed angle of approximately 45°, back to the belt 151 and passes through a vertical slot 167, cf. figures 7c and 7b, at least partly through the belt 151 such that a projecting portion 172 is formed. The second contact member 157 subsequently immediately bends back again to the rear side of the belt 151 through that same slot 167 and goes downward with a vertical portion 168, i.e. substantially parallel to the belt 151, along a rear side of the abutment element 160 located opposite to the abutment face 161 thereof located at the front side, whereupon it moves substantially at right angles towards the substrate 2 just below the abutment element 160, the second contact portion 158 thus being the free end of the second contact member 157.

Parallel to and at a small distance from said vertical slot 167 in the belt 151 there is a smaller vertical slot 169 which is in fact a receiving portion, while furthermore a horizontal slot is present, or at least a slot extending parallel to the extension direction of the belt 151, which slot extends through the two vertical slots 167, 169. The slot 169 forms part of blocking means in the form of a blocking element integrated into the belt 151. Said receiving portion 169 also forms part of these blocking means integrated into the belt 151.

To achieve a switch from the active position shown in figures 6a and 6c to the inactive position shown in figure 7a, in which inactive position the second contact portion 157 is shifted away from the substrate 2 in backward direction such that the second contact portion 158 thereof is no longer in contact with a rear side of the substrate 2, the device comprises a switching device 171 that forms part of the operating means and that comprises an operating element designed so as to be capable of extending partly into said horizontal slot 170 and of moving towards and from the carrier belt 151 in this location for making contact with said projecting portion 172 of the second contact member 157. When the carrier belt 151 in operation moves to the right along the arrows indicated in figure 7b while the switching device 171 extends with its operating element into the slot 170, the second contact member 157 will not only be pressed in backward direction by the operating element pressing against the projecting portion 172, but the second contact member 157 will also be held back somewhat relative to the carrier belt 151 owing to the displacement of the carrier belt 151 relative to the operating element, so that it is forced from the vertical slot 167 and in the direction of the receiving portion formed adjacent thereto by the slot 169, whereupon the operating element is moved away from the carrier belt 151 so that the projecting portion 172 of the second contact member 157 will enter the smaller slot 169. The smaller size thereof means that the second contact member 157 cannot extend far forward, or at least less far through the carrier belt 151, so that the second contact portion 158 will be at a distance from the substrate 2, as figure 7a shows. The second contact member can be pushed from the slot 169 again by a further switching device forming part of the operating means, for example a push pin, so that the second contact member 157 enters its active position again. To prevent the second contact portion from coming into too violent a contact with the substrate, a stationary guide block forming part of the device is provided at the front of the substrate, which block guides the projecting portion 172 along a stationary sloping surface slowly into a further projecting position, in which the second contact member is in the active position, exactly when the projecting portion 172 projects from the front of the belt 151.

In the manner described above, accordingly, both the first contact member 155 and the second contact member 157 can be moved from an active position into an inactive position and vice versa. This renders it possible to carry out a number of different electroplating operations with a device in which the transport member 121 is provided without replacing the transport member 121 or the contact members 153 provided therein, as is necessary in the prior art device described above which comprises a transport member 21 with contact members 53. If a substrate 2 with a seed layer of electrically conducting material in the form of main tracks 181 and sub-tracks 182 at the front side only is provided, the first contact members 155 present in longitudinal positions on the carrier belt 151 corresponding to the main tracks 181 can be brought into the active position for electrolytically galvanizing the substrate 2, i.e. they come into electrically conducting contact by their contact portions 156 with the main tracks 181 on the substrate 2. It can be achieved at the same time that the rear side of the substrate 2 is fastened to the carrier belt 151 in an electrically insulated manner in that the second contact members 157 are brought into the inactive position.

If said electrically conducting material to be electroplated is present on both sides of the substrate, both the first contact member 155 and the second contact member 157 can be brought into the active position, at least one for each substrate 2. If only the rear side of the substrate is to be connected to the belt 151 with electrical conduction for electroplating the rear side of the substrate 2, it is possible to bring only the second contact member 157 into the active position.

A device provided with the transport member 151 according to the invention is also suitable for light induced plating if the device is in addition provided with lighting means for illuminating a front side of the substrate. In this case the substrate does not have a seed layer, but material has been removed from an outer layer of the substrate, usually an anti-reflection layer of a passivating layer, in a preceding treatment such as, for example, a laser treatment or an etching treatment, in those positions where main tracks and sub-tracks are to be formed. In an embodiment, photoresist may be provided on the surface to be treated prior to the above treatment and be removed again together with the outer layer in the specific locations to be treated. This photoresist forms an additional protection in the untreated locations for preventing undesired plating during the electroplating process. At least one second contact member 157 per substrate must be in electrically conducting contact with a rear side of the substrate not provided with conductor tracks during light induced plating, and no first contact members 155 are allowed to be in the active position. A seed layer is deposited under the influence of the light incident on the substrate from the electrolytic solution in those locations where the outer layer was removed from the substrate.

Without removing the substrate from the transport member 121 it is now possible to put a second contact member 157 that is in contact with the substrate in the inactive position and a first contact member 155 can be put in the active position so that it comes into contact with the seed layer of the substrate formed shortly before, whereupon further electrically conducting material can be deposited by electroplating for forming complete main and sub-tracks

## Claims

1. A transport member for transporting plate-shaped substrates, such as those used for solar cells, which substrates are to be electrolytically galvanized in a bath, comprising a carrier belt which in operation extends along an endless horizontal track, with resilient wire-shaped first contact members fastened thereto which each have a first contact portion that is designed for contacting, in an electrically conducting manner, a first side of a substrate under prestress in an active position of the first contact member and for being clear of the substrate in an inactive position of the first contact member, **characterized in that** the transport member further comprises resilient wire-shaped second contact members fastened to the carrier belt, which second contact members each have a second contact portion that is designed for contacting, in an electrically conducting manner, a second side of the same substrate under prestress in an active position of the second contact member and for being clear of said same substrate in an inactive position of the second contact member, while the transport member further comprises blocking means for blocking the first contact members and the second contact members in the inactive positions thereof during the electrolytic galvanizing process.

2. A transport member according to claim 1, wherein the blocking means comprise a first blocking element for each first contact member and a second blocking element for each second contact member for blocking the associated contact member in the inactive position.

3. A transport member according to claim 2, wherein the blocking means of at least one of the first contact members and of the second contact members comprise blocking elements which are integrated into the carrier belt.

4. A transport member according to any one of the preceding claims, wherein the carrier belt is manufactured from an electrically conducting material and comprises abutment elements of an electrically insulating material at the locations of the first contact portions, which abutment elements are provided such that a substrate in the active position is clamped in between an abutment face of an abutment element and a first contact portion with the second side of the substrate lying against the abutment face.

5. A transport member according to claim 4, wherein the first contact members in their inactive positions each bear with a portion closely adjoining the contact portion on a respective associated abutment element such that the contact portion is at a distance from the abutment face of the relevant abutment element.

6. A transport member according to claim 5, wherein the first contact members are located mainly at a rear side of the carrier belt, which rear side faces in the same direction as the second side of the substrate, and extend through passages in the carrier belt to a front side of the carrier belt such that at least the contact portion and the portion closely adjoining the contact portion are present at the front side.

7. A transport member according to claim 5 or 6, wherein the abutment elements define an edge which projects from the carrier belt and behind which said portion of the first contact member closely adjoining the contact portion is hooked under the influence of the resilience of the first contact member, at least in the inactive position, while the first contact member is configured such that its first contact portion moves into the active position under the influence of the resilience of the first contact member when switching means move said portion off said edge.

8. A transport member according to claim 3 or any claim dependent thereon, wherein the second contact members are located mainly at a rear side of the carrier belt, which rear side faces in the same direction as the second side of the substrate, while the carrier belt has a passage for each second contact member into which the respective contact member, at least in the active position thereof, enters with a projecting portion, and the carrier belt furthermore comprises for each second contact member a receiving portion located close to said passage, the receiving portion forming the abutment element, and being designed for receiving the projecting portion such that the second contact member is in the inactive position.

9. A transport member according to any one of the preceding claims, wherein one first contact portion and one second contact portion are in contact with the substrate, at least in their active positions, in one another's immediate vicinity each time, preferably in the same longitudinal position on the carrier belt.

10. A transport member according to any one of the preceding claims, wherein the first contact members and the second contact members are formed by one integral resilient wire-shaped contact member.

11. A transport member according to any one of the preceding claims, further comprising resilient wire-shaped clamping members fastened to the carrier belt by their own spring force for gripping a substrate with clamping force, preferably in an electrically insulating manner.

12. A device for electrolytically galvanizing plate-shaped substrates, such as those for solar cells, in a bath with an electrolytic solution, comprising a transport member according to any one of the preceding claims, wheels which are rotatable about vertical axes and over which the transport member is passed, first operating means arranged alongside the transport member for switching a first contact member between the active position and the inactive position against its prestress due to contact between the first operating means and a portion of said first contact member, and second operating means arranged alongside the transport member for switching a second contact member between the active position and the inactive position against its prestress due to contact between the second operating means and a portion of said second contact member.

13. A method of electrolytically galvanizing plate-shaped substrates, such as those for solar cells, with the use of a device according to claim 12, comprising steps of:
attaching a substrate to the transport member,
achieving, by the second operating means, that at least one second contact member in the active position thereof is in contact by its second contact portion with a second side of the substrate,
cathodically switching the substrate via the second contact member for the purpose of light induced plating, and illuminating the substrate with lighting means such that a seed layer of electrically conducting material is deposited from the electrolytic solution onto the first side of said substrate,
subsequently achieving, by the second operating means, that said at least one second contact member is brought into its inactive position, and achieving, by the first operating means, that at least one first contact member in the active position thereof is in contact by its first contact portion with the seed layer on the first side of the substrate, and
cathodically switching the seed layer via the first contact portion for the purpose of electrolytic galvanizing such that electrically conducting material is deposited from the electrolytic solution onto the seed layer on the first side of the substrate.

## Patentansprüche

1. Ein Fördermittel zum Transport plattenförmiger Substrate wie solchen, die für Solarzellen verwendet werden, wobei die Substrate in einem Bad elektrolytisch galvanisiert werden sollen, welches einen sich in Betrieb entlang eines endlosen horizontalen Wegs erstreckenden Fördergurt mit daran befestigten flexiblen drahtförmigen ersten Kontaktteilen, die jeweils einen ersten Kontaktbereich besitzen, der dafür vorgesehen ist, dass er in einer aktiven Position des ersten Kontaktteils gespannt und auf elektrisch leitfähige Weise im Kontakt mit der ersten Seite des Substrats und in einer inaktiven Position des ersten Kontaktteils von dem Substrat entfernt ist, umfasst, **dadurch gekennzeichnet, dass** das Fördermittel weiterhin an dem Fördergurt befestigte flexible drahtförmige zweite Kontaktteile, die jeweils einen zweiten Kontaktbereich besitzen, der dafür vorgesehen ist, dass er in einer aktiven Position des zweiten Kontaktteils gespannt und auf elektrisch leitfähige Weise im Kontakt mit der zweiten Seite desselben Substrats und in einer inaktiven Position des zweiten Kontaktteils von dem Substrat entfernt ist, umfasst, wobei das Fördermittel ferner Blockiermittel zum Blockieren der ersten und zweiten Kontaktteile in ihrer inaktiven Position während des elektrolytischen Galvanisierens umfasst.

2. Ein Fördermittel nach Anspruch 1, wobei die Blockiermittel ein erstes Blockierelement für jedes erste Kontaktteil und ein zweites Blockierelement für jedes zweite Kontaktteil für das Blockieren des zugehörigen Kontaktteils in der inaktiven Position umfassen.

3. Ein Fördermittel nach Anspruch 2, wobei die Blockiermittel mindestens eines von dem ersten und dem zweiten Kontaktteil Blockierelemente, die in den Gurtförderer integriert sind, umfassen.

4. Ein Fördermittel nach einem der vorhergehenden Ansprüche, wobei der Gurtförderer aus einem elektrisch leitfähigen Material hergestellt ist und Anschlagelemente aus einem elektrisch isolierenden Material an den Stellen der ersten Kontaktbereiche umfasst, wobei die Anschlagelemente derart vorgesehen sind, dass das Substrat in der aktiven Position zwischen der Anschlagfläche eines Anschlagelements und einem ersten Kontaktbereich eingeklemmt ist, wobei die zweite Seite des Substrats an der Fläche des Widerlagers anliegt.

5. Ein Fördermittel nach Anspruch 4, wobei in der inaktiven Position die ersten Kontaktteile jeweils mit einem eng mit dem Kontaktbereich verbundenen Bereich derart an dem jeweils zugehörigen Anschlagelement anliegen, dass der Kontaktbereich von der Anschlagfläche des zugehörigen Anschlagelements entfernt ist.

6. Ein Fördermittel nach Anspruch 5, wobei sich die ersten Kontaktteile hauptsächlich auf der Rückseite des Fördergurts befinden, die in dieselbe Richtung wie die zweite Seite des Substrats zeigt, und sich durch Öffnungen im Fördergurt hindurch derart erstrecken, dass wenigstens der Kontaktbereich und der eng mit diesem verbundene Bereich sich auf der Vorderseite befinden.

7. Ein Fördermittel nach Anspruch 5 oder 6, wobei die Anschlagelemente eine vom Fördergurt abstehende Kante bilden, hinter welcher der Bereich des ersten Kontaktteils, der eng mit dem Kontaktbereich verbunden ist, wenigstens in der inaktiven Position, durch die Einwirkung der Flexibilität des ersten Kontaktteils einhakt, und das erste Kontaktteil so gestaltet ist, dass sein erster Kontaktbereich sich unter der Einwirkung der Flexibilität des ersten Kontaktteils in die aktive Position bewegt, wenn der Bereich durch Schaltmittel von dieser Kante wegbewegt wird.

8. Ein Fördermittel nach Anspruch 3 oder einem davon abhängigen Anspruch, wobei sich die zweiten Kontaktteile hauptsächlich auf der Rückseite des Fördergurts befinden, wobei die Rückseite in dieselbe Richtung wie die zweite Seite des Substrats zeigt, der Fördergurt eine Öffnung für jedes zweite Kontaktteil besitzt, in welche das jeweilige Kontaktteil, wenigstens in seiner aktiven Position, mit einem vorstehenden Bereich gelangt, und der Fördergurt weiterhin für jedes zweite Kontaktteil einen aufnehmenden Bereich umfasst, der sich nah an dieser Öffnung befindet, wobei der aufnehmende Bereich das Anschlagelement bildet und vorgesehen ist, den vorstehenden Bereich derart aufzunehmen, dass sich das zweite Kontaktteil in der inaktiven Position befindet.

9. Ein Fördermittel nach einem der vorhergehenden Ansprüche, wobei sich, wenigstens in der aktiven Position, ein erster Kontaktbereich und ein zweiter Kontaktbereich im Kontakt mit dem Substrat, jederzeit in unmittelbarer Nachbarschaft zueinander und vorzugsweise in derselben Längsausrichtung am Fördergurt befinden.

10. Ein Fördermittel nach einem der vorhergehenden Ansprüche, wobei die ersten und zweiten Kontaktteile jeweils aus einem flexiblen, drahtförmigen integralen Kontaktteil gebildet sind.

11. Ein Fördermittel nach einem der vorhergehenden Ansprüche, welches ferner flexible drahtförmige Klemmteile umfasst, die durch ihre Federkraft an dem Fördergurt befestigt sind und ein Substrat durch Klemmkraft, vorzugsweise auf eine elektrisch isolierte Art und Weise, ergreifen sollen.

12. Eine Vorrichtung zum elektrolytischen Galvanisieren plattenförmiger Substrate, wie solchen für Solarzellen, in einem Bad mit einer Elektrolytlösung, welche ein Fördermittel nach einem der vorhergehenden Ansprüche, Räder, die um vertikale Achsen drehbar sind und über welche das Fördermittel läuft, erste Betätigungsmittel, die entlang des Fördermittels angeordnet sind, um ein erstes Kontaktmittel zwischen der aktiven und der inaktiven Position gegen seine Vorspannung aufgrund des Kontakts des ersten Betätigungsmittels mit einem Bereich dieses ersten Kontaktmittels umzuschalten, und zweite Betätigungsmittel, die entlang des Fördermittels angeordnet sind, um ein zweites Kontaktmittel zwischen der aktiven und der inaktiven Position gegen seine Vorspannung aufgrund des Kontakts des zweiten Betätigungsmittels mit einem Bereich dieses zweiten Kontaktmittels umzuschalten, umfasst.

13. Ein Verfahren zum elektrolytischen Galvanisieren plattenförmiger Substrate, wie solchen für Solarzellen, unter Verwendung einer Vorrichtung nach Anspruch 12, welches die Stufen:
- Befestigen eines Substrats an dem Fördermittel,
- Erreichen, dass sich durch die zweiten Betätigungsmittel mindestens ein zweites Kontaktmittel in seiner aktiven Position befindet, das sich über seinen zweiten Kontaktbereich mit der zweiten Seite des Substrats in Kontakt befindet,
- kathodisches Umschalten des Substrats über das zweite Kontaktteil zu dem Zweck eines lichtinduzierten Beschichtens und Beleuchten des Substrats durch ein Beleuchtungsmittel, sodass aus der elektrolytischen Lösung eine Kristallisationsschicht aus einem elektrisch leitfähigen Material auf der ersten Seite dieses Substrats abgeschieden wird, anschließend
- Erreichen durch die zweiten Betätigungsmittel, dass dieses mindestens eine zweite Kontaktteil in seine inaktive Position gebracht wird, und Erreichen durch die ersten Betätigungsmittel, dass mindestens ein erstes Kontaktteil in seiner aktiven Position sich über seinen ersten Kontaktbereich mit der Kristallisationsschicht auf der ersten Seite des Substrats in Kontakt befindet, und
- kathodisches Umschalten der Kristallisationsschicht über den ersten Kontaktbereich zu dem Zweck des elektrolytischen Galvanisieren derart, dass das elektrisch leitfähige Material aus der Elektrolyselösung auf der Kristallisationsschicht der ersten Seite des Substrats abgeschieden wird,
umfasst.

## Revendications

1. Organe de transport pour transporter des substrats en forme de plaque, tels que ceux utilisés pour des cellules solaires, lesquels substrats doivent être galvanisés électrolytiquement dans un bain, comprenant une courroie transporteuse qui, lors du fonctionnement, s'étend le long d'une piste horizontale sans fin, avec des premiers organes de contact en forme de fil élastiques fixés à celle-ci qui ont chacun une première partie de contact qui est conçue pour entrer en contact, d'une manière électriquement conductrice, avec un premier côté d'un substrat sous précontrainte dans une position active du premier organe de contact et pour être dégagée du substrat dans une position inactive du premier organe de contact, **caractérisé en ce que** l'organe de transport comprend en outre des deuxièmes organes de contact en forme de fil élastiques fixés à la courroie transporteuse, lesquels deuxièmes organes de contact ont chacun une deuxième partie de contact qui est conçue pour entrer en contact, d'une manière électriquement conductrice, avec un deuxième côté du même substrat sous précontrainte dans une position active du deuxième organe de contact et pour être dégagée dudit même substrat dans une position inactive du deuxième organe de contact, tandis que l'organe de transport comprend en outre des moyens de blocage pour bloquer les premiers organes de contact et les deuxièmes organes de contact dans leurs positions inactives pendant le procédé de galvanisation électrolytique.

2. Organe de transport selon la revendication 1, dans lequel les moyens de blocage comprennent un premier élément de blocage pour chaque premier organe de contact et un deuxième élément de blocage pour chaque deuxième organe de contact pour bloquer l'organe de contact associé dans la position inactive.

3. Organe de transport selon la revendication 2, dans lequel les moyens de blocage d'au moins l'un des premiers organes de contact et des deuxièmes organes de contact comprennent des éléments de blocage qui sont intégrés dans la courroie transporteuse.

4. Organe de transport selon l'une quelconque des revendications précédentes, dans lequel la courroie transporteuse est fabriquée à partir d'un matériau électriquement conducteur et comprend des éléments de butée d'un matériau électriquement isolant à des emplacements des premières parties de contact, lesquels éléments de butée sont prévus de sorte qu'un substrat dans la position active soit serré entre une face de butée d'un élément de butée et une première partie de contact avec le deuxième côté du substrat reposant contre la face de butée.

5. Organe de transport selon la revendication 4, dans lequel les premiers organes de contact dans leurs positions inactives s'appuient chacun par une partie étroitement adjacente à la partie de contact sur un élément de butée associé respectif de sorte que la partie de contact soit à une distance par rapport à la face de butée de l'élément de butée concerné.

6. Organe de transport selon la revendication 5, dans lequel les premiers organes de contact sont situés principalement sur un côté arrière de la courroie transporteuse, lequel côté arrière est orienté dans la même direction que le deuxième côté du substrat, et s'étendent à travers des passages dans la courroie transporteuse vers un côté avant de la courroie transporteuse de sorte qu'au moins la partie de contact et la partie étroitement adjacente à la partie de contact soient présentes sur le côté avant.

7. Organe de transport selon la revendication 5 ou 6, dans lequel les éléments de butée définissent un bord qui fait saillie à partir de la courroie transporteuse et derrière lequel ladite partie du premier organe de contact étroitement adjacente à la partie de contact est accrochée sous l'influence de l'élasticité du premier organe de contact, au moins dans la position inactive, tandis que le premier organe de contact est configuré de sorte que sa première partie de contact se déplace dans la position active sous l'influence de l'élasticité du premier organe de contact lorsque des moyens de commutation éloignent ladite partie par rapport audit bord.

8. Organe de transport selon la revendication 3 ou n'importe quelle revendication qui dépend de celle-ci, dans lequel les deuxièmes organes de contact sont situés principalement sur un côté arrière de la courroie transporteuse, lequel côté arrière est orienté dans la même direction que le deuxième côté du substrat, tandis que la courroie transporteuse a un passage pour chaque deuxième organe de contact dans lequel l'organe de contact respectif, au moins dans sa position active, entre avec une partie en saillie, et la courroie transporteuse comprend en outre, pour chaque deuxième organe de contact, une partie de réception située près dudit passage, la partie de réception formant l'élément de butée et étant conçue pour recevoir la partie en saillie de sorte que le deuxième organe de contact soit dans la position inactive.

9. Organe de transport selon l'une quelconque des revendications précédentes, dans lequel une première partie de contact et une deuxième partie de contact sont en contact avec le substrat, au moins dans leurs positions actives, au voisinage immédiat l'une de l'autre à chaque fois, de préférence dans le même position longitudinale sur la courroie transporteuse.

10. Organe de transport selon l'une quelconque des revendications précédentes, dans lequel les premiers organes de contact et les deuxièmes organes de contact sont formés par un organe de contact en forme de fil élastique monobloc.

11. Organe de transport selon l'une quelconque des revendications précédentes, comprenant en outre des organes de serrage en forme de fil élastiques fixés à la courroie transporteuse par leur propre force de ressort pour saisir un substrat avec une force de serrage, de préférence de manière électriquement isolante.

12. Dispositif pour galvaniser électrolytiquement des substrats en forme de plaque, tels que ceux pour cellules solaires, dans un bain avec une solution électrolytique, comprenant un organe de transport selon l'une quelconque des revendications précédentes, des roues qui peuvent tourner autour d'axes verticaux et sur lesquelles l'organe de transport est amené à passer, des premiers moyens de fonctionnement agencés le long de l'organe de transport pour commuter un premier organe de contact entre la position active et la position inactive contre sa précontrainte en raison du contact entre les premiers moyens de fonctionnement et une partie dudit premier organe de contact, et des deuxièmes moyens de fonctionnement agencés le long de l'organe de transport pour commuter un deuxième organe de contact entre la position active et la position inactive contre sa précontrainte en raison du contact entre les deuxièmes moyens de fonctionnement et une partie dudit deuxième organe de contact.

13. Procédé de galvanisation électrolytique de substrats en forme de plaque, tels que ceux pour cellules solaires, avec l'utilisation d'un dispositif selon la revendication 12, comprenant les étapes qui consistent :
à attacher un substrat à l'organe de transport,
à permettre, par les deuxièmes moyens de fonctionnement, à au moins un deuxième organe de contact dans sa position active d'être en contact par sa deuxième partie de contact avec un deuxième côté du substrat,
à effectuer une commutation cathodique du substrat via le deuxième organe de contact dans le but de réaliser un placage induit par la lumière et éclairer le substrat avec des moyens d'éclairage de sorte qu'une couche de germe de matériau électriquement conducteur soit déposée à partir de la solution électrolytique sur le premier côté dudit substrat,
à permettre par la suite, par les deuxièmes moyens de fonctionnement, audit au moins un deuxième organe de contact d'être amené dans sa position inactive, et à permettre, par les premiers moyens de fonctionnement, à au moins un premier organe de contact dans sa position active d'être en contact par sa première partie de contact avec la couche de germe sur le premier côté du substrat, et
à effectuer une commutation cathodique de la couche de germe via la première partie de contact dans le but de réaliser une galvanisation électrolytique de sorte qu'un matériau électriquement conducteur soit déposé à partir de la solution électrolytique sur la couche de germe sur le premier côté du substrat.
